# EUROPEAN PATENT SPECIFICATION

(11) **EP 3 985 462 B1**
(45) Date of publication and mention of the grant of the patent: **30.04.2025**
(21) Application number: 20905577.1
(22) Date of filing: 19.05.2020
(51) Int. Cl.: H02J 7/00, H02J 9/00

(54) **BATTERY POWER-ON CIRCUIT**
BATTERIEEINSCHALTKREIS
CIRCUIT D'ALIMENTATION DE BATTERIE

(30) Priority: 26.12.2019 CN 201922414950 U
(43) Date of publication of application: 20.04.2022
(73) Proprietor: Pylon Technologies, Co. Ltd, Shanghai 201203 (CN)
(72) Inventor: LIU, Ming, Shanghai 201203 (CN); LI, Fanjun, Shanghai 201203 (CN); SHI, Lu, Shanghai 201203 (CN); YAO, Bin, Shanghai 201203 (CN)
(74) Representative: Tansini, Elio Fabrizio
(86) International application number: PCT/CN2020/091099
(87) International publication number: WO 2021/128710

(56) References cited:
- EP-A2- 1 069 667
- WO-A1-2019/184363
- CN-A- 110 138 200
- CN-B- 103 375 850
- CN-B- 103 699 199
- CN-U- 203 759 164
- CN-U- 205 485 902
- CN-U- 206 790 181
- CN-Y- 201 251 698
- JP-A- S63 272 962
- KR-A- 20180 029 184
- US-A- 4 019 119
- US-B2- 10 224 709

## Description

### TECHNICAL FIELD

Embodiments of the present invention relate to the field of battery technologies, and in particular, to a battery switch-on circuit.

### BACKGROUND

At present, with the development of lithium batteries as energy storage devices of many electronic devices toward high power, low costs, and low standby power consumption, power of a battery is likely to be exhausted in long-time standby mode, failing to meet a long-time standby function required for electronic devices. In the prior art, to avoid power consumption caused by long-time standby of a battery, the battery, after being switched off, needs to be switched on using some additionally provided mechanical switches such as a button.

Document CN 205 485 902 U discloses an automatic boot circuit for electronic equipment. When electronic equipment is connected and has a power supply adapter to charge to battery unit, the automatic boot circuit triggers the operation of a power management chip performing auto power-on.

### SUMMARY

Embodiments of the present invention provide a battery switch-on circuit to achieve automatic switch-on of a battery power supply unit when a load is connected.

The present invention provides a battery switch-on circuit, the battery switch-on circuit including a power supply circuit and a switch circuit, where:
the power supply circuit includes a battery power supply unit, a first voltage dividing resistor, a second voltage dividing resistor, and a fourth switch device, where a positive electrode of the battery power supply unit is connected to a first terminal of the first voltage dividing resistor, a negative electrode of the battery power supply unit is electrically connected to a first terminal of the second voltage dividing resistor and an input terminal of the fourth switch device respectively, and a second terminal of the first voltage dividing resistor and a second terminal of the second voltage dividing resistor are electrically connected to each other and are further connected to an output terminal of the fourth switch device;
the switch circuit includes a dual-channel voltage comparison unit and a switch control unit, the dual-channel voltage comparison unit includes a first input terminal and a first output terminal and a second input terminal and a second output terminal,
the first input terminal is electrically connected to the positive electrode of the battery power supply unit, the first output terminal is electrically connected to a first control terminal of the switch control unit, the second input terminal is electrically connected to the output terminal of the fourth switch device, the second output terminal is electrically connected to a second control terminal of the switch control unit, and an output terminal of the switch control unit is electrically connected to a control terminal of the fourth switch device; and
the dual-channel voltage comparison unit is configured to transmit, when a positive electrode voltage of the battery power supply unit is lower than a reference voltage, a first control signal to the first control terminal of the switch control unit to cause the switch control unit to control the fourth switch device to switch off, and is further configured to transmit, when an output terminal voltage of the fourth switch device is higher than the reference voltage, a second control signal to the second control terminal of the switch control unit to cause the switch control unit to control the fourth switch device to switch on.

Optionally, the battery switch-on circuit further includes a chip working power supply; and the dual-channel voltage comparison unit includes a dual-channel comparator, the reference voltage is preset in the dual-channel comparator, the dual-channel comparator includes a power supply terminal, and the power supply terminal is electrically connected to the chip working power supply.

Optionally, the dual-channel voltage comparison unit further includes a third voltage dividing resistor and a fourth voltage dividing resistor; the dual-channel comparator includes a first input terminal and a first output terminal;
a first terminal of the third voltage dividing resistor is electrically connected to the positive electrode of the battery power supply unit, a first terminal of the fourth voltage dividing resistor is connected to a ground terminal, and a second terminal of the third voltage dividing resistor and a second terminal of the fourth voltage dividing resistor are electrically connected to each other and are connected to the first input terminal of the dual-channel comparator; and
the dual-channel comparator is configured to transmit the first control signal to the first control terminal of the switch control unit through the first output terminal of the dual-channel comparator when it is detected that a voltage at the first input terminal of the dual-channel comparator is lower than the reference voltage. Optionally, the dual-channel voltage comparison unit further includes a fifth voltage dividing resistor and a sixth voltage dividing resistor; a first terminal of the fifth voltage dividing resistor is electrically connected to the output terminal of the fourth switch device, and a first terminal of the sixth voltage dividing resistor and a second terminal of the fifth voltage dividing resistor are electrically connected to each other and are connected to a second input terminal of the dual-channel comparator; and
the dual-channel comparator is configured to transmit the second control signal to the second control terminal of the switch control unit through the second output terminal of the dual-channel comparator when it is detected that a voltage at the second input terminal of the dual-channel comparator is higher than the reference voltage.

Optionally, the dual-channel voltage comparison unit further includes a reference voltage unit, and the dual-channel comparator includes a first reference voltage terminal and a second reference voltage terminal; and
an output terminal of the reference voltage unit is electrically connected to the first reference voltage terminal and the second reference voltage terminal respectively, and the reference voltage unit is configured to control both the first reference voltage terminal and the second reference voltage terminal to be kept at the reference voltage.

Optionally, the reference voltage unit includes a reference voltage device and a seventh resistor; and
the reference voltage device includes a reference terminal, the reference terminal is electrically connected to the chip working power supply by the seventh resistor, and the reference terminal is further electrically connected to the first reference voltage terminal and the second reference voltage terminal respectively.

Optionally, the switch control unit includes a first switch device, a second switch device, a third switch device, a pull-down resistor, and a pull-up resistor, where:
a gate of the second switch device is electrically connected to the second output terminal of the dual-channel voltage comparison unit, a source of the second switch device is connected to a ground terminal, and a drain of the second switch device is connected to a first terminal of the pull-down resistor;
a gate of the third switch device is electrically connected to the first output terminal of the dual-channel voltage comparison unit, a source of the third switch device is connected to the ground terminal, and a drain of the third switch device is electrically connected to the second output terminal of the dual-channel voltage comparison unit; and
a second terminal of the pull-down resistor is electrically connected to a first terminal of the pull-up resistor and a gate of the first switch device respectively, a source of the first switch device and a second terminal of the pull-up resistor are electrically connected to each other and are connected to a first voltage power supply, and a drain of the first switch device is electrically connected to the control terminal of the fourth switch device.

Optionally, the first switch device is a p-channel metal-oxide-semiconductor (PMOS), and the second switch device, the third switch device, and the fourth switch device are all n-channel metal-oxide-semiconductors (NMOSs).

Optionally, an output voltage of the first voltage power supply is 12 V.

Optionally, an output voltage of the battery power supply unit is 12 V, and an initial floating voltage of the output terminal of the fourth switch device is 5 V.

The embodiments of the present invention disclose a battery switch-on circuit, including a power supply circuit and a switch circuit. The power supply circuit includes a battery power supply unit, a first voltage dividing resistor, a second voltage dividing resistor, and a fourth switch device. The switch circuit includes a dual-channel voltage comparison unit and a switch control unit. A first input terminal of the dual-channel voltage comparison unit is electrically connected to a positive electrode of the battery power supply unit. A second input terminal of the dual-channel voltage comparison unit is electrically connected to an output terminal of the fourth switch device. The dual-channel voltage comparison unit is configured to transmit, when a positive electrode voltage of the battery power supply unit is lower than a reference voltage, a first control signal to the first control terminal of the switch control unit to cause the switch control unit to control the fourth switch device to switch off, and is further configured to transmit, when an output terminal voltage of the fourth switch device is higher than the reference voltage, a second control signal to the second control terminal of the switch control unit to cause the switch control unit to control the fourth switch device to switch on. Whereby, automatic switch-on of the battery power supply unit is achieved when a load is connected.

### BRIEF DESCRIPTION OF THE DRAWINGS

FIG. 1 is a diagram of a power supply circuit of a battery switch-on circuit according to an embodiment of the present invention; and
FIG. 2 is a diagram of a switch circuit of a battery switch-on circuit according to an embodiment of the present invention.

### DETAILED DESCRIPTION

The following further describes embodiments of the present invention in detail with reference to the accompanying drawings and embodiments. It may be understood that specific embodiments described herein are only used to explain the embodiments of the present invention, but not to limit the embodiments of the present invention. In addition, it should be further noted that, for ease of description, the accompanying drawings only show parts relevant to the embodiments of the present invention rather than the entire structure.

### EMBODIMENTS

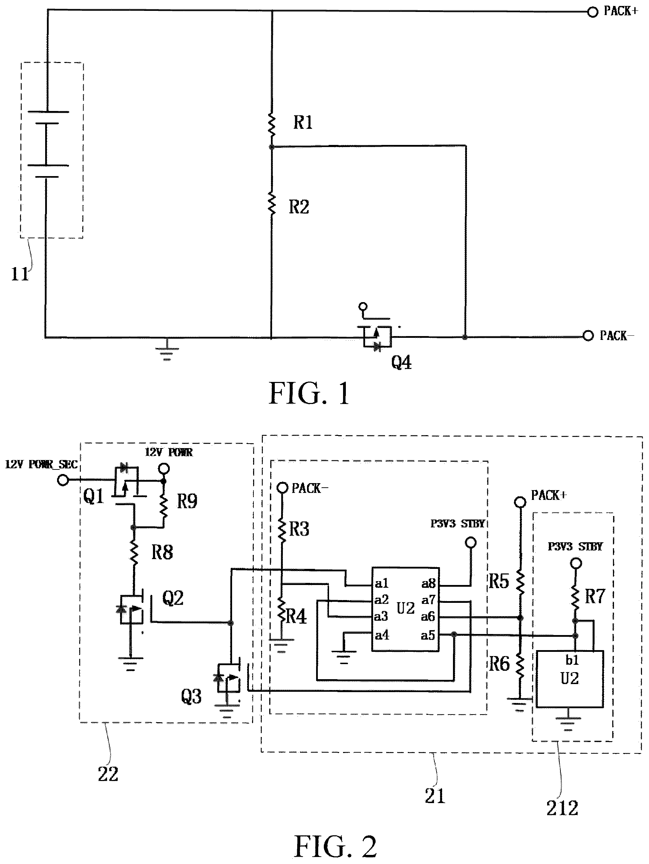

FIG. 1 is a diagram of a power supply circuit of a battery switch-on circuit according to an embodiment of the present invention, and FIG. 2 is a diagram of a switch circuit of a battery switch-on circuit according to an embodiment of the present invention. As shown in FIG. 1 and FIG. 2, the battery switch-on circuit includes a power supply circuit and a switch circuit.

Referring to FIG. 1, the power supply circuit includes a battery power supply unit 11, a first voltage dividing resistor R1, a second voltage dividing resistor R2, and a fourth switch device Q4. A positive electrode of the battery power supply unit 11 is connected to a first terminal of the first voltage dividing resistor R1. A negative electrode of the battery power supply unit 11 is electrically connected to a first terminal of the second voltage dividing resistor R2 and an input terminal of the fourth switch device Q4 respectively. A second terminal of the first voltage dividing resistor R1 and a second terminal of the second voltage dividing resistor R2 are electrically connected to each other and are further connected in parallel to an output terminal of the fourth switch device Q4.

Referring to FIG. 2, the switch circuit includes a dual-channel voltage comparison unit 21 and a switch control unit 22. The dual-channel voltage comparison unit 21 includes a first input terminal PACK+ and a first output terminal a7 disposed opposite to each other and a second input terminal PACK- and a second output terminal a1 disposed opposite to each other. With reference to FIG. 1 and FIG. 2, the first input terminal PACK+ is electrically connected to the positive electrode of the battery power supply unit 11, the first output terminal a7 is electrically connected to a first control terminal of the switch control unit 22, the second input terminal PACK- is electrically connected to the output terminal of the fourth switch device Q4, the second output terminal a1 is electrically connected to a second control terminal of the switch control unit 22, and an output terminal 12V POWR_SEC of the switch control unit 22 is electrically connected to a control terminal of the fourth switch device Q4.

The dual-channel voltage comparison unit 21 is configured to transmit, when a positive electrode voltage of the battery power supply unit 11 is lower than a reference voltage, a first control signal to the first control terminal of the switch control unit 22 to cause the switch control unit 22 to control the fourth switch device Q4 to switch off, and is further configured to transmit, when an output terminal voltage of the fourth switch device Q4 is higher than the reference voltage, a second control signal to the second control terminal of the switch control unit 22 to cause the switch control unit 22 to control the fourth switch device Q4 to switch on.

When no load is connected, the fourth switch device Q4 is off, a voltage signal of the battery power supply unit 11 is divided by the first voltage dividing resistor R1 and the second voltage dividing resistor R2, and then the output terminal of the fourth switch device Q4 outputs an initial floating voltage. For example, the battery power supply unit 11 supplies a voltage of 12 V, and the initial floating voltage is 5 V.

When a load is connected, the positive electrode and the negative electrode of the battery power supply unit 11 are short-circuited, a voltage outputted by the output terminal of the fourth switch device Q4 is equal to the positive electrode voltage of the battery power supply unit 11, the output terminal voltage of the fourth switch device Q4 is higher than the reference voltage, and the dual-channel voltage comparison unit 21 transmits the second control signal to the second control terminal of the switch control unit 22 to cause the fourth switch device Q4 to switch on. When the positive electrode voltage of the battery power supply unit 11 is insufficient, i.e., the positive electrode voltage of the battery power supply unit 11 is lower than the reference voltage, the dual-channel voltage comparison unit 21 transmits the first control signal to the first control terminal of the switch control unit 22 to cause the fourth switch device Q4 to switch off. In this way, when a load is connected and the output terminal voltage of the fourth switch device Q4 is equal to the positive electrode voltage of the battery power supply unit 11, the battery power supply unit 11 is connected to an external load, and when electric power in the battery power supply unit 11 is insufficient or when no load is connected, the battery power supply unit 11 is disconnected from the external load. Whereby, automatic switch-on of the battery power supply unit 11 is achieved when a load is connected, thereby avoiding power consumption caused by long-time standby of the battery.

Further, based on the foregoing embodiment, optionally, the battery switch-on circuit further includes a chip working power supply P3V3 STBY.

Still referring to FIG. 2, the dual-channel voltage comparison unit 21 includes a dual-channel comparator U2. The reference voltage is preset in the dual-channel comparator U2. The dual-channel comparator U2 includes a power supply terminal a8. The power supply terminal a8 is electrically connected to the chip working power supply P3V3 STBY.

The chip working power supply P3V3 STBY is electrically connected to the power supply terminal a8 of the dual-channel comparator, and is configured to supply power to the dual-channel comparator U2. For example, the chip working power supply P3V3 STBY supplies a 3.3 V direct current to continuously supply power to the dual-channel comparator U2, so that the dual-channel comparator U2 keeps working without consuming electric power in the battery power supply unit.

Optionally, the dual-channel voltage comparison unit 21 further includes a reference voltage unit 212, and the dual-channel comparator U2 includes a first reference voltage terminal a2 and a second reference voltage terminal a5; and
an output terminal of the reference voltage unit 212 is electrically connected to the first reference voltage terminal a2 and the second reference voltage terminal a5 respectively, and the reference voltage unit 212 is configured to control both the first reference voltage terminal a2 and the second reference voltage terminal a5 to be kept at the reference voltage.

Optionally, the reference voltage unit 212 includes a reference voltage device U1 and a seventh resistor R7; and
the reference voltage device U1 includes a reference terminal, the reference terminal b1 is electrically connected to the chip working power supply P3V3 STBY by the seventh resistor R7, and the reference terminal b1 is further electrically connected to the first reference voltage terminal a2 and the second reference voltage terminal a5 respectively.

The chip working power supply P3V3 STBY is electrically connected to the reference terminal b1 of the reference voltage device U1 by the seventh resistor R7, and is configured to supply power to the reference voltage device U1. For example, the chip working power supply P3V3 STBY supplies a 3.3 V direct current, and the chip working power supply P3V3 STBY serves as a backup power supply to avoid consuming electric power in the battery power supply unit 11, and continuously supplies power to the reference voltage device U1.

The reference voltage unit 212 supplies a reference voltage of 2.5 V, the output terminal of the reference voltage unit 212 is electrically connected to the first reference voltage terminal a2 and the second reference voltage terminal a5 respectively, and the first reference voltage terminal a2 and the second reference voltage terminal a5 in the dual-channel comparator U2 are kept at a reference voltage value of 2.5 V.

Referring to FIG. 2, optionally, the dual-channel voltage comparison unit 21 further includes a third voltage dividing resistor R3 and a fourth voltage dividing resistor R4.

The dual-channel comparator U2 includes a first input terminal a6 and a first output terminal a7 disposed opposite to each other.

A first terminal of the third voltage dividing resistor R3 is electrically connected to the positive electrode of the battery power supply unit 11, a first terminal of the fourth voltage dividing resistor R4 is connected to a ground terminal, and a second terminal of the third voltage dividing resistor R3 and a second terminal of the fourth voltage dividing resistor R4 are electrically connected to each other and are connected to the first input terminal a6 of the dual-channel comparator U2.

The dual-channel comparator U2 is configured to transmit the first control signal to the first control terminal of the switch control unit 22 through the first output terminal a7 of the dual-channel comparator U2 when it is detected that a voltage at the first input terminal a6 of the dual-channel comparator U2 is lower than the reference voltage.

Optionally, the dual-channel voltage comparison unit 21 further includes a fifth voltage dividing resistor R5 and a sixth voltage dividing resistor R6.

A first terminal of the fifth voltage dividing resistor R5 is electrically connected to the output terminal of the fourth switch device Q4, and a first terminal of the sixth voltage dividing resistor R6 and a second terminal of the fifth voltage dividing resistor R5 are electrically connected to each other and are connected to a second input terminal a3 of the dual-channel comparator U2.

The dual-channel comparator U2 is configured to transmit the second control signal to the second control terminal of the switch control unit 22 through the second output terminal a1 of the dual-channel comparator U2 when it is detected that a voltage at the second input terminal a3 of the dual-channel comparator U2 is higher than the reference voltage.

Optionally, the switch control unit 22 includes a first switch device Q1, a second switch device Q2, a third switch device Q3, a pull-down resistor R8, and a pull-up resistor R9.

A gate of the second switch device Q2 is electrically connected to the second output terminal a1 of the dual-channel voltage comparison unit 21, a source of the second switch device Q2 is connected to a ground terminal, and a drain of the second switch device Q2 is connected to a first terminal of the pull-down resistor R8.

A gate of the third switch device Q3 is electrically connected to the first output terminal a7 of the dual-channel voltage comparison unit 21, a source of the third switch device Q3 is connected to the ground terminal, and a drain of the third switch device Q3 is electrically connected to the second output terminal a1 of the dual-channel voltage comparison unit 21.

A second terminal of the pull-down resistor R8 is electrically connected to a first terminal of the pull-up resistor R9 and a gate of the first switch device Q1 respectively, a source of the first switch device Q1 and a second terminal of the pull-up resistor R9 are electrically connected to each other and are connected to a first voltage power supply 12V POWR, and a drain 12V POWR_SEC of the first switch device Q1 is electrically connected to the control terminal of the fourth switch device Q4.

The pull-down resistor R8 and the pull-up resistor R9 provide a current limiting function.

It should be noted that the working principle of the battery switch-on circuit is as follows: when a load is connected, the positive electrode and the negative electrode of the battery power supply unit 11 are short-circuited, and the output terminal of the fourth switch device Q4 outputs a relatively large voltage signal, which is then divided by the third voltage dividing resistor R3 and the fourth voltage dividing resistor R4 and transmitted to the second input terminal a3 of the dual-channel comparator U2. In this way, the voltage at the second input terminal a3 of the dual-channel comparator U2 is higher than the voltage at the second reference voltage terminal a2, and the second output terminal a1 of the dual-channel comparator U2 outputs a high level, to drive the second switch device Q2 to switch on and pull down the voltage at the gate of the first switch device. In this case, the first switch device Q1 is on, the voltage signal of the first voltage power supply 12V POWR is outputted to the gate of the fourth switch device Q4 through the first switch device Q1, and the fourth switch device is on, thereby achieving automatic switch-on of the battery power supply unit. When electric power in the battery power supply unit 11 is insufficient, i.e., when the positive electrode voltage of the battery power supply unit 11 is insufficient, the voltage signal is divided by the fifth voltage dividing resistor R5 and the sixth voltage dividing resistor R6 and then transmitted to the first input terminal a6 of the dual-channel comparator U2. In this case, the voltage at the first input terminal a6 of the dual-channel comparator U2 is higher than the voltage at the first reference voltage terminal a2, and the first output terminal a7 of the dual-channel comparator U2 outputs a high level, to drive the third switch device Q3 to switch on and pull down the voltage at the gate of the second switch device Q2. In this case, the second switch device Q2 is off, the pull-up resistor R9 pulls up the voltage at the gate of the first switch device, the first switch device Q1 is off, the first switch power supply 12V POWR_SEC cannot transmit the voltage signal to the fourth switch device Q4, the fourth switch device Q4 is off, and the battery power supply unit is in an off state.

Optionally, the first switch device Q1 is a PMOS, and the second switch device Q2, the third switch device Q3, and the fourth switch device Q4 are all NMOSs.

Optionally, an output voltage of the first voltage power supply is 12 V.

Optionally, an output voltage of the battery power supply unit 11 is 12 V.

According to this technical solution, when no load is connected, the fourth switch device Q4 is off; when a load is connected, the voltage at the output terminal of the fourth switch device Q4 increases, and after voltage comparison by the dual-channel comparator U2, the second output terminal a1 of the dual-channel comparator U2 outputs a high voltage, to control the second switch device Q2 to switch on, so as to pull down the voltage at the gate of the first switch device Q1, and the first switch device Q1 is on. Then the first voltage power supply 12V POWR outputs a voltage signal to the gate of the fourth switch device Q4 through the first switch device Q1 to control the fourth switch device Q4 to switch on, thereby achieving a connection between the battery power supply unit and the load. When electric power in the battery power supply unit 11 is insufficient, i.e., when the positive electrode voltage of the battery power supply unit 11 is lower than the reference voltage, the first output terminal a7 of the dual-channel comparator U2 outputs a high level after voltage comparison by the dual-channel comparator U2, to control the third switch device to switch on, so as to pull down (the voltage of) the control terminal of the second switch device, then the second switch device and the first switch device are off, the first voltage power supply 12V POWR cannot output the voltage signal to the gate of the fourth switch device Q4, and the fourth switch device Q4 is off, thereby achieving automatic switch-on of the battery power supply unit when a load is connected, and avoiding power consumption caused by long-time standby of the battery.

It can be noted that the above are merely preferred embodiments of the present invention and the technical principles used. A person skilled in the art may understand that the present invention is not limited to the specific embodiments described herein. For a person skilled in the art, various obvious changes, readjustments, and replacements can be made without departing from the protection scope of the present invention, as defined by the appended claims. Therefore, although the present invention is described in detail by using the foregoing embodiments, the present invention is not limited to the foregoing embodiments, and the scope of the present invention is determined by the scope of the attached claims.

## Claims

1. A battery switch-on circuit, comprising: a power supply circuit and a switch circuit, wherein:
the power supply circuit comprises a battery power supply unit (11), a first voltage dividing resistor (R1), a second voltage dividing resistor (R2), and a fourth switch device (Q4), wherein a positive electrode of the battery power supply unit (11) is connected to a first terminal of the first voltage dividing resistor (R1), a negative electrode of the battery power supply unit (11) is electrically connected to a first terminal of the second voltage dividing resistor (R2) and an input terminal of the fourth switch device (Q4) respectively, and a second terminal of the first voltage dividing resistor (R1) and a second terminal of the second voltage dividing resistor (R2) are electrically connected to each other;
the switch circuit comprises a dual-channel voltage comparison unit (21) and a switch control unit (22), the dual-channel voltage comparison unit comprises a first input terminal (PACK+) and a first output terminal (a7) and a second input terminal (PACK-) and a second output terminal (a1), the first input terminal (PACK+) is electrically connected to the positive electrode of the battery power supply unit (11), the first output terminal is electrically connected to a first control terminal of the switch control unit, the second input terminal (PACK-) is electrically connected to the output terminal of the fourth switch device (Q4), the second output terminal is electrically connected to a second control terminal of the switch control unit, and an output terminal (12V POWR_SEC) of the switch control unit is electrically connected to a control terminal of the fourth switch device (Q4); and
the dual-channel voltage comparison unit is configured to transmit, when a positive electrode voltage of the battery power supply unit (11) is lower than a reference voltage, a first control signal to the first control terminal of the switch control unit to cause the switch control unit to control the fourth switch device (Q4) to switch off, and is further configured to transmit, when an output terminal voltage of the fourth switch device (Q4) is higher than the reference voltage, a second control signal to the second control terminal of the switch control unit to cause the switch control unit to control the fourth switch device (Q4) to switch on.

2. The battery switch-on circuit according to claim 1, wherein the battery switch-on circuit further comprises a chip working power supply; and
the dual-channel voltage comparison unit comprises a dual-channel comparator (212), the reference voltage is preset in the dual-channel comparator, the dual-channel comparator comprises a power supply terminal, and the power supply terminal is electrically connected to the chip working power supply.

3. The battery switch-on circuit according to claim 1, wherein the dual-channel voltage comparison unit further comprises a third voltage dividing resistor and a fourth voltage dividing resistor;
the dual-channel comparator comprises a first input terminal (PACK+) and a first output terminal,
a first terminal of the third voltage dividing resistor is electrically connected to the positive electrode of the battery power supply unit (11), a first terminal of the fourth voltage dividing resistor is connected to a ground terminal, and a second terminal of the third voltage dividing resistor and a second terminal of the fourth voltage dividing resistor are electrically connected to each other and are connected to the first input terminal (PACK+) of the dual-channel comparator; and
the dual-channel comparator is configured to transmit the first control signal to the first control terminal of the switch control unit through the first output terminal of the dual-channel comparator when it is detected that a voltage at the first input terminal (PACK+) of the dual-channel comparator is lower than the reference voltage.

4. The battery switch-on circuit according to claim 1, wherein the dual-channel voltage comparison unit further comprises a fifth voltage dividing resistor and a sixth voltage dividing resistor;
a first terminal of the fifth voltage dividing resistor is electrically connected to the output terminal of the fourth switch device (Q4), and a first terminal of the sixth voltage dividing resistor and a second terminal of the fifth voltage dividing resistor are electrically connected to each other and are connected to a second input terminal (PACK-) of the dual-channel comparator; and
the dual-channel comparator is configured to transmit the second control signal to the second control terminal of the switch control unit through the second output terminal of the dual-channel comparator when it is detected that a voltage at the second input terminal (PACK-) of the dual-channel comparator is higher than the reference voltage.

5. The battery switch-on circuit according to claim 2, wherein the dual-channel voltage comparison unit further comprises a reference voltage unit (212), and the dual-channel comparator comprises a first reference voltage terminal and a second reference voltage terminal; and
an output terminal of the reference voltage unit (212) is electrically connected to the first reference voltage terminal and the second reference voltage terminal respectively, and the reference voltage unit (212) is configured to control both the first reference voltage terminal and the second reference voltage terminal to be kept at the reference voltage.

6. The battery switch-on circuit according to claim 5, wherein the reference voltage unit (212) comprises a reference voltage device and a seventh resistor; and
the reference voltage device comprises a reference terminal, the reference terminal is electrically connected to the chip working power supply by the seventh resistor, and the reference terminal is further electrically connected to the first reference voltage terminal and the second reference voltage terminal respectively.

7. The battery switch-on circuit according to claim 1, wherein the switch control unit comprises a first switch device, a second switch device, a third switch device, a pull-down resistor, and a pull-up resistor, wherein:
a gate of the second switch device is electrically connected to the second output terminal of the dual-channel voltage comparison unit, a source of the second switch device is connected to a ground terminal, and a drain of the second switch device is connected to a first terminal of the pull-down resistor;
a gate of the third switch device is electrically connected to the first output terminal of the dual-channel voltage comparison unit, a source of the third switch device is connected to the ground terminal, and a drain of the third switch device is electrically connected to the second output terminal of the dual-channel voltage comparison unit; and
a second terminal of the pull-down resistor is electrically connected to a first terminal of the pull-up resistor and a gate of the first switch device respectively, a source of the first switch device and a second terminal of the pull-up resistor are electrically connected to each other and are connected to a first voltage power supply, and a drain of the first switch device is electrically connected to the control terminal of the fourth switch device (Q4).

8. The battery switch-on circuit according to claim 7, wherein the first switch device is a p-channel metal-oxide-semiconductor (PMOS), and the second switch device, the third switch device, and the fourth switch device (Q4) are all n-channel metal-oxide-semiconductors (NMOSs).

9. The battery switch-on circuit according to claim 7, wherein an output voltage of the first voltage power supply is 12 V.

10. The battery switch-on circuit according to claim 1, wherein the reference voltage is 2.5 V, an output voltage of the battery power supply unit (11) is 12 V, and an initial floating voltage of the output terminal of the fourth switch device (Q4) is 5 V.

## Patentansprüche

1. Batterieeinschaltkreis, umfassend: einen Stromversorgungskreis und einen Schaltkreis, wobei:
der Stromversorgungskreis eine Batteriestromversorgungseinheit (11), einen ersten Spannungsteilerwiderstand (R1), einen zweiten Spannungsteilerwiderstand (R2) und eine vierte Schaltvorrichtung (Q4) umfasst, wobei eine positive Elektrode der Batteriestromversorgungseinheit (11) mit einem ersten Anschluss des ersten Spannungsteilerwiderstands (R1) verbunden ist, eine negative Elektrode der Batteriestromversorgungseinheit (11) elektrisch jeweils mit einem ersten Anschluss des zweiten Spannungsteilerwiderstands (R2) und einem Eingangsanschluss der vierten Schaltvorrichtung (Q4) verbunden ist und ein zweiter Anschluss des ersten Spannungsteilerwiderstands (R1) und ein zweiter Anschluss des zweiten Spannungsteilerwiderstands (R2) elektrisch miteinander verbunden sind;
der Schaltkreis eine Zweikanal-Spannungsvergleichseinheit (21) und eine Schaltersteuereinheit (22) umfasst, die Zweikanal-Spannungsvergleichseinheit einen ersten Eingangsanschluss (PACK+) und einen ersten Ausgangsanschluss (a7) und einen zweiten Eingangsanschluss (PACK-) und einen zweiten Ausgangsanschluss (a1) umfasst, der erste Eingangsanschluss (PACK+) elektrisch mit der positiven Elektrode der Batteriestromversorgungseinheit (11) verbunden ist, der erste Ausgangsanschluss elektrisch mit einem ersten Steueranschluss der Schaltersteuereinheit verbunden ist, der zweite Eingangsanschluss (PACK-) elektrisch mit dem Ausgangsanschluss der vierten Schaltervorrichtung (Q4) verbunden ist, der zweite Ausgangsanschluss elektrisch mit einer zweiten Steueranschluss der Schaltersteuereinheit verbunden ist und ein Ausgangsanschluss (12V POWR_SEC) der Schaltersteuereinheit elektrisch mit einem Steueranschluss der vierten Schaltervorrichtung (Q4) verbunden ist; und
die Zweikanal-Spannungsvergleichseinheit ausgelegt ist, um, wenn eine positive Elektrodenspannung der Batteriestromversorgungseinheit (11) niedriger als eine Referenzspannung ist, ein erstes Steuersignal an den ersten Steueranschluss der Schaltersteuereinheit zu übertragen, um zu bewirken, dass die Schaltersteuereinheit die vierte Schaltvorrichtung (Q4) zum Ausschalten steuert, und ferner ausgelegt ist, um, wenn eine Ausgangsanschlussspannung der vierten Schaltvorrichtung (Q4) höher als die Referenzspannung ist, ein zweites Steuersignal an den zweiten Steueranschluss der Schaltersteuereinheit zu übertragen, um zu bewirken, dass die Schaltersteuereinheit die vierte Schaltvorrichtung (Q4) zum Einschalten steuert.

2. Batterieeinschaltkreis nach Anspruch 1, wobei der Batterieeinschaltkreis ferner eine Chipbetriebsstromversorgung umfasst; und
die Zweikanal-Spannungsvergleichseinheit einen Zweikanal-Komparator (212) umfasst, die Referenzspannung in dem Zweikanal-Komparator voreingestellt ist, der Zweikanal-Komparator einen Stromversorgungsanschluss umfasst und der Stromversorgungsanschluss elektrisch mit der Chipbetriebsstromversorgung verbunden ist.

3. Batterieeinschaltkreis nach Anspruch 1, wobei die Zweikanal-Spannungsvergleichseinheit ferner einen dritten Spannungsteilerwiderstand und einen vierten Spannungsteilerwiderstand umfasst;
der Zweikanal-Komparator einen ersten Eingangsanschluss (PACK+) und einen ersten Ausgangsanschluss umfasst,
ein erster Anschluss des dritten Spannungsteilerwiderstands elektrisch mit der positiven Elektrode der Batteriestromversorgungseinheit (11) verbunden ist, ein erster Anschluss des vierten Spannungsteilerwiderstands mit einem Massenanschluss verbunden ist und ein zweiter Anschluss des dritten Spannungsteilerwiderstands und ein zweiter Anschluss des vierten Spannungsteilerwiderstands elektrisch miteinander verbunden sind und mit dem ersten Eingangsanschluss (PACK+) des Zweikanal-Komparators verbunden sind; und
der Zweikanal-Komparator dazu ausgelegt ist, das erste Steuersignal über den ersten Ausgangsanschluss des Zweikanal-Komparators an den ersten Steueranschluss der Schaltersteuereinheit zu übertragen, wenn erfasst wird, dass eine Spannung an dem ersten Eingangsanschluss (PACK+) des Zweikanal-Komparators niedriger als die Referenzspannung ist.

4. Batterieeinschaltkreis nach Anspruch 1, wobei die Zweikanal-Spannungsvergleichseinheit ferner einen fünften Spannungsteilerwiderstand und einen sechsten Spannungsteilerwiderstand umfasst;
ein erster Anschluss des fünften Spannungsteilerwiderstands elektrisch mit dem Ausgangsanschluss der vierten Schaltvorrichtung (Q4) verbunden ist und ein erster Anschluss des sechsten Spannungsteilerwiderstands und ein zweiter Anschluss des fünften Spannungsteilerwiderstands elektrisch miteinander verbunden sind und mit einem zweiten Eingangsanschluss (PACK-) des Zweikanal-Komparators verbunden sind; und
der Zweikanal-Komparator dazu ausgelegt ist, das zweite Steuersignal über den zweiten Ausgangsanschluss des Zweikanal-Komparators an den zweiten Steueranschluss der Schaltersteuereinheit zu übertragen, wenn erfasst wird, dass eine Spannung an dem zweiten Eingangsanschluss (PACK-) des Zweikanal-Komparators höher als die Referenzspannung ist.

5. Batterieeinschaltkreis nach Anspruch 2, wobei die Zweikanal-Spannungsvergleichseinheit ferner eine Referenzspannungseinheit (212) umfasst und der Zweikanal-Komparator einen ersten Referenzspannungsanschluss und einen zweiten Referenzspannungsanschluss umfasst; und
ein Ausgangsanschluss der Referenzspannungseinheit (212) jeweils elektrisch mit dem ersten Referenzspannungsanschluss und dem zweiten Referenzspannungsanschluss verbunden ist, und die Referenzspannungseinheit (212) dazu ausgelegt ist, sowohl den ersten Referenzspannungsanschluss als auch den zweiten Referenzspannungsanschluss zu steuern, um auf der Referenzspannung gehalten zu werden.

6. Batterieeinschaltkreis nach Anspruch 5, wobei die Referenzspannungseinheit (212) eine Referenzspannungsvorrichtung und einen siebten Widerstand umfasst; und
die Referenzspannungsvorrichtung einen Referenzanschluss umfasst, der Referenzanschluss durch den siebten Widerstand elektrisch mit der Chipbetriebsstromversorgung verbunden ist und der Referenzanschluss ferner jeweils elektrisch mit dem ersten Referenzspannungsanschluss und dem zweiten Referenzspannungsanschluss verbunden ist.

7. Batterieeinschaltkreis nach Anspruch 1, wobei die Schaltersteuereinheit eine erste Schaltervorrichtung, eine zweite Schaltervorrichtung, eine dritte Schaltervorrichtung, einen Pull-Down-Widerstand und einen Pull-Up-Widerstand umfasst, wobei:
ein Gate der zweiten Schaltvorrichtung elektrisch mit dem zweiten Ausgangsanschluss der Zweikanal-Spannungsvergleichseinheit verbunden ist, eine Source der zweiten Schaltvorrichtung mit einem Masseanschluss verbunden ist und ein Drain der zweiten Schaltvorrichtung mit einem ersten Anschluss des Pull-Down-Widerstands verbunden ist;
ein Gate der dritten Schaltvorrichtung elektrisch mit dem ersten Ausgangsanschluss der Zweikanal-Spannungsvergleichseinheit verbunden ist, eine Source der dritten Schaltvorrichtung mit dem Masseanschluss verbunden ist und ein Drain der dritten Schaltvorrichtung elektrisch mit dem zweiten Ausgangsanschluss der Zweikanalspannungsvergleichseinheit verbunden ist; und
ein zweiter Anschluss des Pull-Down-Widerstands ist jeweils elektrisch mit einem ersten Anschluss des Pull-Up-Widerstands und einem Gate der ersten Schaltvorrichtung verbunden, eine Source der ersten Schaltvorrichtung und ein zweiter Anschluss des Pull-Up-Widerstands sind elektrisch miteinander verbunden und sind mit einer ersten Spannungsstromversorgung verbunden, und ein Drain der ersten Schaltvorrichtung ist elektrisch mit dem Steueranschluss der vierten Schaltvorrichtung (Q4) verbunden.

8. Batterieeinschaltkreis nach Anspruch 7, wobei die erste Schaltvorrichtung ein p-Kanal-Metalloxid-Halbleiter (PMOS) ist und die zweite Schaltvorrichtung, die dritte Schaltvorrichtung und die vierte Schaltvorrichtung (Q4) alle n-Kanal-Metalloxid-Halbleiter (NMOS) sind.

9. Batterieeinschaltkreis nach Anspruch 7, wobei eine Ausgangsspannung der ersten Spannungsstromversorgung 12 V beträgt.

10. Batterieeinschaltkreis nach Anspruch 1, wobei die Referenzspannung 2,5 V beträgt, eine Ausgangsspannung der Batteriestromversorgungseinheit (11) 12 V beträgt und eine anfängliche Floating-Spannung des Ausgangsanschlusses der vierten Schaltvorrichtung (Q4) 5 V beträgt.

## Revendications

1. Circuit d'allumage de batterie, comprenant : un circuit d'alimentation électrique et un circuit de commutation, dans lequel :
le circuit d'alimentation électrique comprend une unité d'alimentation électrique de batterie (11), une première résistance de division de tension (R1), une deuxième résistance de division de tension (R2) et un quatrième dispositif de commutation (Q4), dans lequel une électrode positive de l'unité d'alimentation électrique de batterie (11) est connectée à une première borne de la première résistance de division de tension (R1), une électrode négative de l'unité d'alimentation électrique de batterie (11) est connectée électriquement, respectivement, à une première borne de la deuxième résistance de division de tension (R2) et à une borne d'entrée du quatrième dispositif de commutation (Q4), et une seconde borne de la première résistance de division de tension (R1) et une seconde borne de la deuxième résistance de division de tension (R2) sont connectées électriquement l'une à l'autre ;
le circuit de commutation comprend une unité de comparaison de tension à double voie (21) et une unité de commande de commutation (22), l'unité de comparaison de tension à double voie comprend une première borne d'entrée (PACK+) et une première borne de sortie (a7) et une seconde borne d'entrée (PACK-) et une seconde borne de sortie (a1), la première borne d'entrée (PACK+) est connectée électriquement à l'électrode positive de l'unité d'alimentation électrique de batterie (11), la première borne de sortie est connectée électriquement à une première borne de commande de l'unité de commande de commutation, la seconde borne d'entrée (PACK-) est connectée électriquement à la borne de sortie du quatrième dispositif de commutation (Q4), la seconde borne de sortie est connectée électriquement à une seconde borne de commande de l'unité de commande de commutation, et une borne de sortie (12V POWR_SEC) de l'unité de commande de commutation est connectée électriquement à une borne de commande du quatrième dispositif de commutation (Q4) ; et
l'unité de comparaison de tension à double voie est configurée pour transmettre, lorsqu'une tension d'électrode positive de l'unité d'alimentation électrique de batterie (11) est inférieure à une tension de référence, un premier signal de commande à la première borne de commande de l'unité de commande de commutation pour amener l'unité de commande de commutation à commander le quatrième dispositif de commutation (Q4) pour qu'il s'éteigne, et est en outre configurée pour transmettre, lorsqu'une tension de borne de sortie du quatrième dispositif de commutation (Q4) est supérieure à la tension de référence, un deuxième signal de commande à la seconde borne de commande de l'unité de commande de commutation pour amener l'unité de commande de commutation à commander le quatrième dispositif de commutation (Q4) pour qu'il s'allume.

2. Circuit d'allumage de batterie selon la revendication 1, dans lequel le circuit d'allumage de batterie comprend en outre une alimentation de service de puce ; et l'unité de comparaison de tension à double voie comprend un comparateur à double voie (212), la tension de référence est préréglée dans le comparateur à double voie, le comparateur à double voie comprend une borne d'alimentation électrique, et la borne d'alimentation électrique est connectée électriquement à l'alimentation de service de puce.

3. Circuit d'allumage de batterie selon la revendication 1, dans lequel l'unité de comparaison de tension à double voie comprend en outre une troisième résistance de division de tension et une quatrième résistance de division de tension ;
le comparateur à double voie comprend une première borne d'entrée (PACK+) et une première borne de sortie,
une première borne de la troisième résistance de division de tension est connectée électriquement à l'électrode positive de l'unité d'alimentation électrique de batterie (11), une première borne de la quatrième résistance de division de tension est connectée à une borne de terre, et une seconde borne de la troisième résistance de division de tension et une seconde borne de la quatrième résistance de division de tension sont connectées électriquement l'une à l'autre et sont connectées à la première borne d'entrée (PACK+) du comparateur à double voie ; et
le comparateur à double voie est configuré pour transmettre le premier signal de commande à la première borne de commande de l'unité de commande de commutation par l'intermédiaire de la première borne de sortie du comparateur à double voie lorsqu'il est détecté qu'une tension à la première borne d'entrée (PACK+) du comparateur à double voie est inférieure à la tension de référence.

4. Circuit d'allumage de batterie selon la revendication 1, dans lequel l'unité de comparaison de tension à double voie comprend en outre une cinquième résistance de division de tension et une sixième résistance de division de tension ;
une première borne de la cinquième résistance de division de tension est connectée électriquement à la borne de sortie du quatrième dispositif de commutation (Q4), et une première borne de la sixième résistance de division de tension et une seconde borne de la cinquième résistance de division de tension sont connectées électriquement l'une à l'autre et sont connectées à une seconde borne d'entrée (PACK-) du comparateur à double voie ; et
le comparateur à double voie est configuré pour transmettre le second signal de commande à la seconde borne de commande de l'unité de commande de commutation par l'intermédiaire de la seconde borne de sortie du comparateur à double voie lorsqu'il est détecté qu'une tension à la seconde borne d'entrée (PACK-) du comparateur à double voie est supérieure à la tension de référence.

5. Circuit d'allumage de batterie selon la revendication 2, dans lequel l'unité de comparaison de tension à double voie comprend en outre une unité de tension de référence (212), et le comparateur à double voie comprend une première borne de tension de référence et une seconde borne de tension de référence ; et
une borne de sortie de l'unité de tension de référence (212) est connectée électriquement, respectivement, à la première borne de tension de référence et à la seconde borne de tension de référence, et l'unité de tension de référence (212) est configurée pour commander la première borne de tension de référence et la seconde borne de tension de référence afin qu'elles soient maintenues à la tension de référence.

6. Circuit d'allumage de batterie selon la revendication 5, dans lequel l'unité de tension de référence (212) comprend un dispositif de tension de référence et une septième résistance ; et
le dispositif de tension de référence comprend une borne de référence, la borne de référence est connectée électriquement à l'alimentation de service de puce par la septième résistance, et la borne de référence est également connectée électriquement, respectivement, à la première borne de tension de référence et à la seconde borne de tension de référence.

7. Circuit d'allumage de batterie selon la revendication 1, dans lequel l'unité de commande de commutation comprend un premier dispositif de commutation, un deuxième dispositif de commutation, un troisième dispositif de commutation, une résistance d'excursion basse et une résistance d'excursion haute, dans lequel :
une porte du deuxième dispositif de commutation est connectée électriquement à la seconde borne de sortie de l'unité de comparaison de tension à double voie, une source du deuxième dispositif de commutation est connectée à une borne de terre, et un drain du deuxième dispositif de commutation est connecté à une première borne de la résistance d'excursion basse ;
une porte du troisième dispositif de commutation est connectée électriquement à la première borne de sortie de l'unité de comparaison de tension à double voie, une source du troisième dispositif de commutation est connectée à la borne de terre, et un drain du troisième dispositif de commutation est connecté électriquement à la seconde borne de sortie de l'unité de comparaison de tension à double voie ; et
une seconde borne de la résistance d'excursion basse est connectée électriquement, respectivement, à une première borne de la résistance d'excursion haute et à une porte du premier dispositif de commutation, une source du premier dispositif de commutation et une seconde borne de la résistance d'excursion haute sont connectées électriquement l'une à l'autre et sont connectées à une première alimentation de tension, et un drain du premier dispositif de commutation est connecté électriquement à la borne de commande du quatrième dispositif de commutation (Q4).

8. Circuit d'allumage de batterie selon la revendication 7, dans lequel le premier dispositif de commutation est un métal-oxyde-semiconducteur à canal p (PMOS), et le deuxième dispositif de commutation, le troisième dispositif de commutation, et le quatrième dispositif de commutation (Q4) sont tous des métal-oxyde-semiconducteurs à canal n (NMOS).

9. Circuit d'allumage de batterie selon la revendication 7, dans lequel une tension de sortie de la première alimentation de tension est de 12 V.

10. Circuit d'allumage de batterie selon la revendication 1, dans lequel la tension de référence est de 2,5 V, une tension de sortie de l'unité d'alimentation électrique de batterie (11) est de 12 V, et une tension flottante initiale de la borne de sortie du quatrième dispositif de commutation (Q4) est de 5 V.
